# EUROPÄISCHE PATENTANMELDUNG

(11) **EP 3 670 035 A1**
(43) Veröffentlichungstag der Anmeldung: **24.06.2020**
(21) Anmeldenummer: 18215606.7
(22) Anmeldetag: 21.12.2018
(51) Int. Cl.: B22F 3/14, B22F 3/15, B22F 7/06, B22F 7/08, B22F 5/00

(54) **VERFAHREN ZUR HERSTELLUNG EINES BEARBEITUNGSSEGMENTES ZUM TROCKENBOHREN VON BETONWERKSTOFFEN**

(71) Anmelder: Hilti Aktiengesellschaft, 9494 Schaan (LI)
(72) Erfinder: Sonderegger, Marcel, 9436 Balgach (CH); Toldo, Cliff, 9490 Vaduz (LI)
(74) Vertreter: Hilti Aktiengesellschaft Corporate Intellectual Property

(57) **Zusammenfassung**

Verfahren zur Herstellung eines Bearbeitungssegmentes (41) für die Trockenbearbeitung von Betonwerkstoffen. Das Bearbeitungssegment (41) wird in einem zweistufigen Verfahren hergestellt: In einer ersten Stufe wird ein Grünling aus einem ersten Matrixwerkstoff (44) und ersten Hartstoffpartikeln (45) aufgebaut und in einer zweiten Stufe wird der Grünling unter Temperatur- und Druckeinwirkung zum Bearbeitungssegment (41) weiterverarbeitet.

## Beschreibung

### Technisches Gebiet

Die vorliegende Erfindung betrifft ein Verfahren zur Herstellung eines Bearbeitungssegmentes gemäß dem Oberbegriff des Anspruchs 1.

### Stand der Technik

Bearbeitungswerkzeuge, wie Kernbohrkronen, Sägeblätter und Abtragscheiben, umfassen Bearbeitungssegmente, die an einem rohr-, scheiben- oder ringförmigen Grundkörper befestigt werden, wobei die Bearbeitungssegmente durch Schweißen, Löten oder Kleben mit dem Grundkörper verbunden werden. Abhängig vom Bearbeitungsverfahren des Bearbeitungswerkzeugs werden Bearbeitungssegmente, die zum Kernbohren eingesetzt werden, als Bohrsegmente, Bearbeitungssegmente, die zum Sägen eingesetzt werden, als Sägesegmente und Bearbeitungssegmente, die zum Abtragen eingesetzt werden, als Abtragsegmente bezeichnet.

Bearbeitungssegmente für Kernbohrkronen, Sägeblätter und Abtragscheiben werden aus einem Matrixwerkstoff und Hartstoffpartikeln hergestellt, wobei die Hartstoffpartikel statistisch verteilt vorliegen können oder gemäß einem definierten Partikelmuster im Matrixwerkstoff angeordnet sind. Bei Bearbeitungssegmenten mit statistisch verteilten Hartstoffpartikeln werden der Matrixwerkstoff und die Hartstoffpartikel gemischt, die Mischung wird in eine passende Werkzeugform eingefüllt und zum Bearbeitungssegment weiterverarbeitet. Bei Bearbeitungssegmenten mit gesetzten Hartstoffpartikeln wird ein Grünling schichtweise aus Matrixwerkstoff aufgebaut, in den die Hartstoffpartikel gemäß dem definierten Partikelmuster platziert werden. Bei Bearbeitungssegmenten, die mit dem Grundkörper des Bearbeitungswerkzeuges verschweißt werden, hat sich der Aufbau aus einer Bearbeitungszone und einer Neutralzone bewährt. Die Bearbeitungszone wird aus einem ersten Matrixwerkstoff und die Neutralzone aus einem zweiten Matrixwerkstoff, der vom ersten Matrixwerkstoff verschieden ist, aufgebaut.

Bearbeitungswerkzeuge, die als Kernbohrkrone, Sägeblatt oder Abtragscheibe ausgebildet sind und für die Nassbearbeitung von Betonwerkstoffen vorgesehen sind, sind für die Trockenbearbeitung von Betonwerkstoffen nur bedingt geeignet. Bei der Nassbearbeitung von Betonwerkstoffen entsteht ein abrasiver Betonschlamm, der den Bearbeitungsprozess unterstützt und zu einem Selbstschärfen der Bearbeitungssegmente während der Bearbeitung führt. Der Matrixwerkstoff wird durch den abrasiven Bohrschlamm abgetragen und neue Hartstoffpartikel werden freigelegt. Bei der Trockenbearbeitung von Betonwerkstoffen kann sich kein abrasiver Bohrschlamm bilden, der den Bearbeitungsprozess unterstützen kann. Die Hartstoffpartikel werden schnell stumpf und die Bearbeitungsrate sinkt. Durch den fehlenden Betonschlamm verschleißt der Matrixwerkstoff zu langsam und tiefer liegende Hartstoffpartikel können nicht freigelegt werden. Bei bekannten Bearbeitungswerkzeugen zur Nassbearbeitung weisen der Matrixwerkstoff und die Hartstoffpartikel ähnliche Verschleißraten auf.

### Darstellung der Erfindung

Die Aufgabe der vorliegenden Erfindung besteht darin, ein Verfahren zur Herstellung eines Bearbeitungssegmentes zu entwickeln, mit dem Bearbeitungssegmente hergestellt werden können, die für die Trockenbearbeitung von Betonwerkstoffen geeignet sind. Dabei soll das Bearbeitungssegment bei der Trockenbearbeitung von Betonwerkstoffen eine hohe Bearbeitungsrate und eine möglichst lange Lebensdauer aufweisen.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bearbeitungssegmentes ist erfindungsgemäß dadurch gekennzeichnet, dass beim Herstellen des Grünlings die ersten Hartstoffpartikel in Vertiefungen eines Pressstempels platziert werden und der erste Matrixwerkstoff auf die ersten Hartstoffpartikel aufgetragen wird. Die Idee der vorliegenden Erfindung besteht darin, das Bearbeitungssegment von oben nach unten aufzubauen. Die ersten Hartstoffpartikel, die beim fertigen Bearbeitungssegment an der Oberseite überstehen und den Betonwerkstoff bearbeiten, werden in die Vertiefungen des Pressstempels platziert. Auf die platzierten ersten Hartstoffpartikel wird der erste Matrixwerkstoff aufgetragen, wobei der erste Matrixwerkstoff in einer Lage oder in mehreren Lagen aufgetragen werden kann.

Bearbeitungssegmente, die mit dem erfindungsgemäßen Verfahren hergestellt werden, werden in einem zweistufigen Verfahren hergestellt: In einer ersten Stufe wird ein Grünling aus dem ersten Matrixwerkstoff und den ersten Hartstoffpartikeln aufgebaut und in einer zweiten Stufe wird der Grünling durch Heißpressen unter Temperatur- und Druckeinwirkung zum Bearbeitungssegment weiterverarbeitet.

Das erfindungsgemäße Verfahren ermöglicht die Herstellung von Bearbeitungssegmenten mit einem Überstand der ersten Hartstoffpartikel gegenüber dem ersten Matrixwerkstoff, wobei der Überstand mindestens eines ersten Hartstoffpartikels gegenüber dem ersten Matrixwerkstoff grösser als 400 µm ist. Bearbeitungssegmente, bei denen mindestens einer der ersten Hartstoffpartikel gegenüber dem ersten Matrixwerkstoff einen Überstand von mehr als 400 µm aufweist, sind für die Trockenbearbeitung von Betonwerkstoffen geeignet. Je grösser der Überstand der ersten Hartstoffpartikel ist, umso höher ist die Bearbeitungsrate, die mit dem Bearbeitungswerkzeug erzielt werden kann.

Bevorzugt wird der Pressstempel mit den Vertiefungen beim Heißpressen des Grünlings verwendet. Das Heißpressen des Grünlings erfolgt mithilfe des speziellen Pressstempels, der bereits beim Aufbau des Grünlings eingesetzt wurde, wobei das Heißpressen des Grünlings in Pressrichtung senkrecht zur Querschnittsfläche des Grünlings erfolgt. Die Vertiefungen in der Pressfläche des Presstempels weisen eine Anordnung auf, die dem definierten Partikelmuster der ersten Hartstoffpartikel entspricht. Dadurch können mithilfe des Pressstempels Bearbeitungssegmente erzeugt werden, bei denen die ersten Hartstoffpartikel an der Oberseite einen Überstand gegenüber dem ersten Matrixwerkstoff aufweisen.

In einer Weiterentwicklung des Verfahrens wird vor dem Platzieren der ersten Hartstoffpartikel eine Schutzschicht des ersten Matrixwerkstoffes in die Vertiefungen des Pressstempels aufgetragen. Um den Verschleiß des Pressstempels zu reduzieren, sollte ein direkter Kontakt der ersten Hartstoffpartikel mit dem Pressstempel vermieden werden. Das Auftragen des ersten Matrixwerkstoffes in die Vertiefungen als Schutzschicht verhindert einen direkten Kontakt der ersten Hartstoffpartikel mit dem Pressstempel und reduziert so den Verschleiß des Pressstempels.

In einer alternativen Weiterentwicklung des Verfahrens wird vor dem Platzieren der ersten Hartstoffpartikel eine Schutzschicht eines zweiten Matrixwerkstoffes in die Vertiefungen des Pressstempels aufgetragen, wobei der zweite Matrixwerkstoff vom ersten Matrixwerkstoff verschieden ist. Das Auftragen des zweiten Matrixwerkstoffes in die Vertiefungen als Schutzschicht verhindert einen direkten Kontakt der ersten Hartstoffpartikel mit dem Pressstempel und reduziert so den Verschleiß des Pressstempels. Bei Verwendung eines zweiten Matrixwerkstoffes, der vom ersten Matrixwerkstoff verschieden ist, können Matrixwerkstoffe mit unterschiedlichen Verschleißeigenschaften eingesetzt werden. Der zweite Matrixwerkstoff dient zum Schutz des Pressstempels beim Heißpressen des Grünlings und sollte beim fertigen Bearbeitungssegment möglichst schnell entfernt werden können, um die ersten Hartstoffpartikel, die den Untergrund bearbeiten, freizustellen. Ein zweiter Matrixwerkstoff mit einer höheren Verschleißrate als der erste Matrixwerkstoff lässt sich schnell entfernen.

In einer Weiterentwicklung des Verfahrens werden erste Hartstoffpartikel verwendet, die von einem Hüllwerkstoff umhüllt sind, wobei der Hüllwerkstoff dem ersten Matrixwerkstoff entspricht. Die Verwendung von umhüllten ersten Hartstoffpartikeln hat den Vorteil, dass die ersten Hartstoffpartikel nicht in direktem Kontakt mit dem Pressstempel kommen und der Verschleiß des Pressstempels reduziert werden kann.

In einer alternativen Weiterentwicklung des Verfahrens werden erste Hartstoffpartikel verwendet, die von einem Hüllwerkstoff umhüllt sind, wobei der Hüllwerkstoff vom ersten Matrixwerkstoff verschieden ist. Die Verwendung von umhüllten ersten Hartstoffpartikeln hat den Vorteil, dass die ersten Hartstoffpartikel nicht in direktem Kontakt mit dem Pressstempel kommen und der Verschleiß des Pressstempels reduziert werden kann. Bei Verwendung eines Hüllwerkstoffs, der vom ersten Matrixwerkstoff verschieden ist, können Matrixwerkstoffe mit unterschiedlichen Verschleißeigenschaften eingesetzt werden. Der Hüllwerkstoff dient zum Schutz des Pressstempels beim Heißpressen und sollte beim fertigen Bearbeitungssegment möglichst schnell entfernt werden können, um die ersten Hartstoffpartikel, die den Betonwerkstoff bearbeiten, freizustellen.

In einer Weiterentwicklung werden dem ersten Matrixwerkstoff zweite Hartstoffpartikel beigemischt, wobei ein mittlerer Partikeldurchmesser der zweiten Hartstoffpartikel kleiner als ein mittlerer Partikeldurchmesser der ersten Hartstoffpartikel ist. Abhängig von den Verschleißeigenschaften des ersten Matrixwerkstoffes kann es während der Bearbeitung eines Untergrundes mit dem Bearbeitungswerkzeug durch Reibung mit dem Untergrund zu einem verstärkten Verschleiß des ersten Matrixwerkstoffes an den Seitenflächen des Bearbeitungssegmentes kommen. Dieser Verschleiß kann durch die zweiten Hartstoffpartikel reduziert werden. Die zweiten Hartstoffpartikel können als statistisch verteilte Partikel dem ersten Matrixwerkstoff beigemischt werden oder die zweiten Hartstoffpartikel werden gemäß einem definierten zweiten Partikelmuster im ersten Matrixwerkstoff platziert. Die zweiten Hartstoffpartikel werden insbesondere im Bereich der Seitenflächen des Bearbeitungssegmentes platziert.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: zwei Varianten eines als Kernbohrkrone ausgebildeten Bearbeitungswerkzeuges;
- FIGN. 2A, B: zwei Varianten eines als Sägeblatt ausgebildeten Bearbeitungswerkzeuges;
- FIG. 3: ein als Abtragscheibe ausgebildetes Bearbeitungswerkzeug;
- FIGN. 4A-C: ein Bearbeitungssegment in einer dreidimensionalen Darstellung (FIG. 4A), in einer Ansicht auf eine Oberseite (FIG. 4B) und in einer Ansicht auf einer Seitenfläche (FIG. 4C);
- FIG. 5: die Herstellung des Bearbeitungssegmentes der FIGN. 4A-C gemäß dem erfindungsgemäßen Verfahren, wobei in einer ersten Stufe ein Grünling hergestellt wird und in einer zweiten Stufe der Grünling zum Bearbeitungssegment weiterverarbeitet wird; und
- FIGN. 6A-C: einige Werkzeugkomponenten, die bei der Herstellung des Bearbeitungssegmentes der FIGN. 4A-C eingesetzt werden.

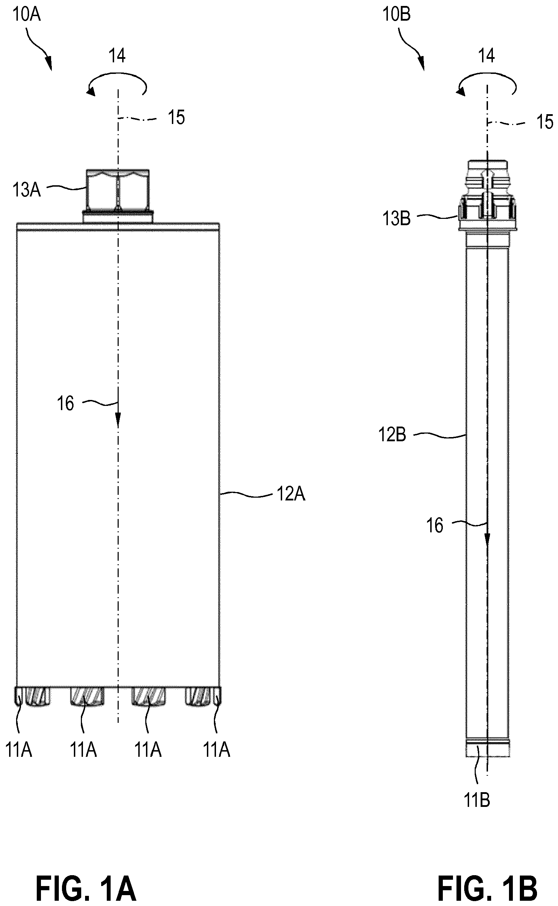

**FIGN. 1A**, **B** zeigen zwei Varianten eines als Kernbohrkrone **10A**, **10B** ausgebildeten Bearbeitungswerkzeuges. Die in FIG. 1A dargestellte Kernbohrkrone 10A wird im Weiteren als erste Kernbohrkrone und die in FIG. 1B dargestellte Kernbohrkrone 10B als zweite Kernbohrkrone bezeichnet, ausserdem werden die erste und zweite Kernbohrkrone 10A, 10B unter dem Begriff "Kernbohrkrone" zusammengefasst.

Die erste Kernbohrkrone 10A umfasst mehrere Bearbeitungssegmente **11A**, einen rohrförmig ausgebildeten Grundkörper **12A** und eine Werkzeugaufnahme **13A.** Die Bearbeitungssegmente 11A, die zum Kernbohren eingesetzt werden, werden auch als Bohrsegmente bezeichnet und der rohrförmig ausgebildete Grundkörper 12A wird auch als Bohrschaft bezeichnet. Die Bohrsegmente 11A sind fest mit dem Bohrschaft 12A verbunden, beispielsweise durch Schrauben, Kleben, Löten oder Schweißen.

Die zweite Kernbohrkrone 10B umfasst ein ringförmiges Bearbeitungssegment **11B**, einen rohrförmig ausgebildeten Grundkörper **12B** und eine Werkzeugaufnahme **13B.** Das ringförmige Bearbeitungssegment 11B, das zum Kernbohren eingesetzt wird, wird auch als Bohrring bezeichnet und der rohrförmig ausgebildete Grundkörper 12B wird auch als Bohrschaft bezeichnet. Der Bohrring 11B ist fest mit dem Bohrschaft 12B verbunden, beispielsweise durch Schrauben, Kleben, Löten oder Schweißen.

Die Kernbohrkrone 10A, 10B wird über die Werkzeugaufnahme 13A, 13B mit einem Kernbohrgerät verbunden und im Bohrbetrieb vom Kernbohrgerät in einer Drehrichtung **14** um eine Drehachse **15** angetrieben. Während der Drehung der Kernbohrkrone 10A, 10B um die Drehachse 15 wird die Kernbohrkrone 10A, 10B entlang einer Vorschubrichtung **16** in ein zu bearbeitendes Werkstück bewegt, wobei die Vorschubrichtung 16 parallel zur Drehachse 15 verläuft. Die Kernbohrkrone 10A, 10B erzeugt im zu bearbeitenden Werkstück einen Bohrkern und ein Bohrloch.

Der Bohrschaft 12A, 12B ist im Ausführungsbeispiel der FIGN. 1A, B einteilig ausgebildet und die Bohrsegmente 11A bzw. der Bohrring 11B sind fest mit dem Bohrschaft 12A, 12B verbunden. Alternativ kann der Bohrschaft 12A, 12B zweiteilig aus einem ersten Bohrschaftabschnitt und einem zweiten Bohrschaftabschnitt ausgebildet sein, wobei die Bohrsegmente 11A bzw. der Bohrring 11B fest mit dem ersten Bohrschaftabschnitt und die Werkzeugaufnahme 13A, 13B fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-DrehVerbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau der Bohrsegmente 11A bzw. des Bohrringes 11B.

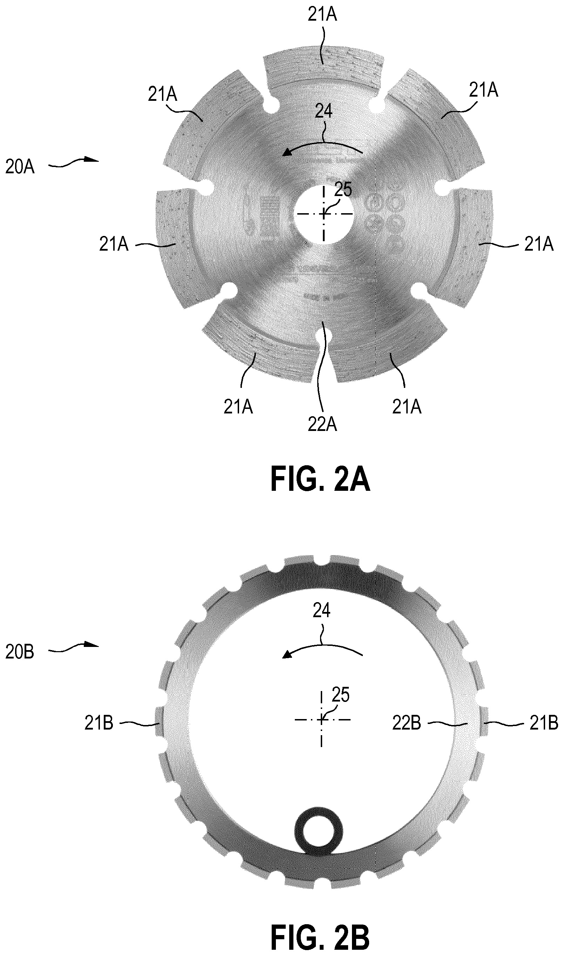

**FIGN. 2A**, **B** zeigen zwei Varianten eines als Sägeblatt **20A**, **20B** ausgebildeten Bearbeitungswerkzeuges. Das in FIG. 2A dargestellte Sägeblatt 20A wird im Weiteren als erstes Sägeblatt und das in FIG. 2B dargestellte Sägeblatt 20B als zweites Sägeblatt bezeichnet, ausserdem werden das erste und zweite Sägeblatt 20A, 20B unter dem Begriff "Sägeblatt" zusammengefasst.

Das erste Sägeblatt 20A umfasst mehrere Bearbeitungssegmente **21A**, einen scheibenförmig ausgebildeten Grundkörper **22A** und eine Werkzeugaufnahme. Die Bearbeitungssegmente 21A, die zum Sägen eingesetzt werden, werden auch als Sägesegmente bezeichnet und der scheibenförmig ausgebildete Grundkörper 22A wird auch als Stammblatt bezeichnet. Die Sägesegmente 21A sind fest mit dem Stammblatt 22A verbunden, beispielsweise durch Schrauben, Kleben, Löten oder Schweißen.

Das zweite Sägeblatt 20B umfasst mehrere Bearbeitungssegmente **21B**, einen ringförmig ausgebildeten Grundkörper **22B** und eine Werkzeugaufnahme. Die Bearbeitungssegmente 21B, die zum Sägen eingesetzt werden, werden auch als Sägesegmente bezeichnet und der ringförmig ausgebildete Grundkörper 22B wird auch als Ring bezeichnet. Die Sägesegmente 21B sind fest mit dem Ring 22B verbunden, beispielsweise durch Schrauben, Kleben, Löten oder Schweißen.

Das Sägeblatt 20A, 20B wird über die Werkzeugaufnahme mit einer Säge verbunden und im Sägebetrieb von der Säge in einer Drehrichtung **24** um eine Drehachse **25** angetrieben. Während der Drehung des Sägeblattes 20A, 20B um die Drehachse 25 wird das Sägeblatt 20A, 20B entlang einer Vorschubrichtung bewegt, wobei die Vorschubrichtung parallel zur Längsebene des Sägeblattes 20A, 20B verläuft. Das Sägeblatt 20A, 20B erzeugt im zu bearbeitenden Werkstück einen Sägeschlitz.

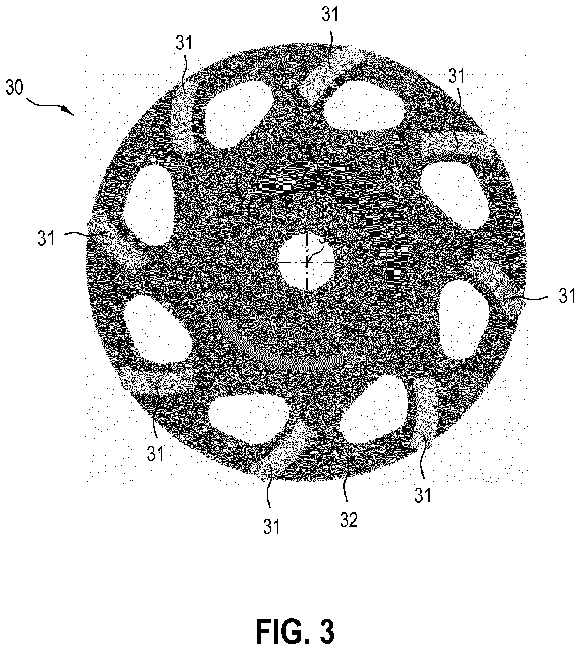

**FIG. 3** zeigt eines als Abtragscheibe **30** ausgebildetes Bearbeitungswerkzeug. Die Abtragscheibe 30 umfasst mehrere Bearbeitungssegmente **31**, einen Grundkörper **32** und eine Werkzeugaufnahme.

Die Bearbeitungssegmente 31, die zum Abtragen eingesetzt werden, werden auch als Abtragsegmente bezeichnet und der scheibenförmig ausgebildete Grundkörper 32 wird auch als Topf bezeichnet. Die Abtragsegmente 31 sind fest mit dem Topf 32 verbunden, beispielsweise durch Schrauben, Kleben, Löten oder Schweißen.

Die Abtragscheibe 30 wird über die Werkzeugaufnahme mit einem Werkzeuggerät verbunden und im Abtragbetrieb vom Werkzeuggerät in einer Drehrichtung **34** um eine Drehachse **35** angetrieben. Während der Drehung der Abtragscheibe 30 um die Drehachse 35 wird die Abtragscheibe 30 über ein zu bearbeitendes Werkstück bewegt, wobei die Bewegung der senkrecht zur Drehachse 35 verläuft. Die Abtragscheibe 30 entfernt die Oberfläche des zu bearbeitenden Werkstücks.

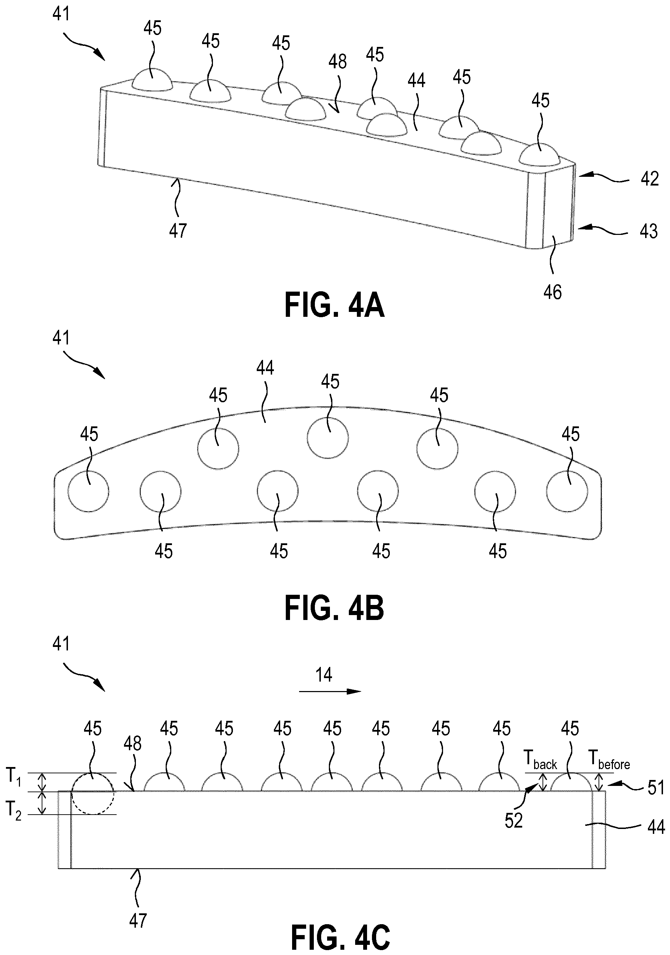

**FIGN. 4A-C** zeigen ein Bearbeitungssegment **41** in einer dreidimensionalen Darstellung (FIG. 4A), in einer Ansicht auf eine Oberseite des Bearbeitungssegmentes 41 (FIG. 4B) und in einer Ansicht auf eine Seitenfläche des Bearbeitungssegmentes 41 (FIG. 4C).

Das Bearbeitungssegment 41 entspricht vom Aufbau und der Zusammensetzung den Bearbeitungssegmenten 11A, 21A, 21B, 31; das als Bohrring ausgebildete Bearbeitungssegment 11B unterscheidet sich durch seinen ringförmigen Aufbau vom Bearbeitungssegment 41. Die Bearbeitungssegmente können sich in den Abmessungen und in den Krümmungen der Oberflächen voneinander unterscheiden. Der grundsätzliche Aufbau der erfindungsgemäßen Bearbeitungssegmente wird anhand des Bearbeitungssegmentes 41 erklärt und gilt für die Bearbeitungssegmente 11A, 11B der FIGN. 1A, B, für die Bearbeitungssegmente 21A, 21B der FIGN. 2A, B und für das Bearbeitungssegment 31 der FIG. 3.

Das Bearbeitungssegment 41 ist aus einer Bearbeitungszone **42** und einer Neutralzone **43** aufgebaut. Die Neutralzone 43 ist erforderlich, wenn das Bearbeitungssegment 41 mit dem Grundkörper eines Bearbeitungswerkzeuges verbunden werden soll; bei Bearbeitungssegmenten, die beispielsweise durch Löten oder Kleben mit dem Grundkörper verbunden werden, kann die Neutralzone 43 entfallen. Die Bearbeitungszone 42 ist aus einem ersten Matrixwerkstoff **44** und ersten Hartstoffpartikeln **45** aufgebaut und die Neutralzone 43 ist aus einem zweiten Matrixwerkstoff **46** ohne Hartstoffpartikel aufgebaut.

Unter dem Begriff "Hartstoffpartikel" werden sämtliche Schneidmittel für Bearbeitungssegmente zusammengefasst; dazu gehören vor allem einzelne Hartstoffpartikel, Verbundteile aus mehreren Hartstoffpartikeln und beschichtete oder gekapselte Hartstoffpartikel. Unter dem Begriff "Matrixwerkstoff" werden sämtliche Werkstoffe zum Aufbau von Bearbeitungssegmenten zusammengefasst, in die Hartstoffpartikel eingebettet werden können. Matrixwerkstoffe können aus einem Werkstoff bestehen oder als Gemisch aus verschiedenen Werkstoffen zusammengesetzt sein.

Bearbeitungssegmente, die mit dem erfindungsgemäßen Verfahren zur Herstellung eines Bearbeitungssegmentes hergestellt werden, weisen eine Schicht mit ersten Hartstoffpartikeln 45 auf, weitere Schichten mit ersten Hartstoffpartikeln 45 sind nicht vorgesehen. Als "erste Hartstoffpartikel" werden die Hartstoffpartikel des Bearbeitungssegmentes 41 bezeichnet, die nach der Herstellung des Bearbeitungssegmentes an der Oberseite einen Überstand gegenüber dem ersten Matrixwerkstoff 44 aufweisen. Hartstoffpartikel, die beim Bearbeitungssegment 41 vollständig in den ersten Matrixwerkstoff 44 eingebettet sind, fallen nicht unter die Definition der ersten Hartstoffpartikel.

Das Bearbeitungssegment 41 wird mit einer Unterseite **47** mit dem Grundkörper des Bearbeitungswerkzeuges verbunden. Bei Bearbeitungssegmenten zum Kernbohren und Bearbeitungssegmenten zum Abtragen ist die Unterseite der Bearbeitungssegmente in der Regel eben ausgebildet, wohingegen die Unterseite bei Bearbeitungssegmenten zum Sägen eine Krümmung aufweist, um die Bearbeitungssegmente an der gekrümmten Stirnfläche der ring- oder scheibenförmigen Grundkörper befestigen zu können.

Das Bearbeitungssegment 41 wird mit einer Unterseite **47** mit dem Grundkörper des Bearbeitungswerkzeuges verbunden. Bei Bearbeitungssegmenten zum Kernbohren und Bearbeitungssegmenten zum Abtragen ist die Unterseite der Bearbeitungssegmente in der Regel eben ausgebildet, wohingegen die Unterseite bei Bearbeitungssegmenten zum Sägen eine Krümmung aufweist, um die Bearbeitungssegmente an der gekrümmten Stirnfläche der ring- oder scheibenförmigen Grundkörper befestigen zu können.

Die ersten Hartstoffpartikel 45 sind gemäß einem definierten Partikelmuster im ersten Matrixwerkstoff 44 angeordnet (FIG. 4B) und weisen an einer der Unterseite 47 gegenüberliegenden Oberseite **48** des Bearbeitungssegmentes 41 einen Überstand **T₁** gegenüber dem ersten Matrixwerkstoff 44 auf. Im Ausführungsbeispiel der FIGN. 4A-C umfasst das Bearbeitungssegment 41 eine Anzahl von 9 ersten Hartstoffpartikeln 45, die an der Oberseite 48 überstehen. Die Anzahl der ersten Hartstoffpartikel 45 und das definierte Partikelmuster, in dem die ersten Hartstoffpartikel 45 im ersten Matrixwerkstoff 44 angeordnet sind, sind an die Anforderungen des Bearbeitungssegmentes 41 angepasst. Die ersten Hartstoffpartikel 45 entstammen in der Regel einer Partikelverteilung, die durch einen minimalen Durchmesser, einen maximalen Durchmesser und einen mittleren Durchmesser charakterisiert ist.

Aufgrund der Partikelverteilung der ersten Hartstoffpartikeln 45 zwischen dem minimalen und maximalen Durchmesser können die Überstände der ersten Hartstoffpartikel 45 entsprechend variieren. Im Ausführungsbeispiel weisen sämtliche ersten Hartstoffpartikel 45 einen Überstand von mehr als 400 µm gegenüber dem umgebenden ersten Matrixwerkstoff 44 auf.

Die in den FIGN. 1A, B, FIGN. 2A, B und FIG. 3 gezeigten erfindungsgemäßen Bearbeitungswerkzeuge, die für die Bearbeitung von Betonwerkstoffen vorgesehen sind, weisen eine definierte Drehrichtung auf. In Drehrichtung des Bearbeitungswerkzeuges betrachtet kann zwischen einem vorderseitigen Bereich und einem rückseitigen Bereich eines Hartstoffpartikels 45 unterschieden werden. Das Bearbeitungssegment 41 eignet sich aufgrund seiner Geometrie mit einer ebenen Unterseite als Bohrsegment für die Kernbohrkrone 10A.

Die Drehrichtung 14 der Kernbohrkrone 10A definiert einen vorderseitigen Bereich **51** und einen rückseitigen Bereich **52.** Die Bearbeitung von Betonwerkstoffen erfolgt in den vorderseitigen Bereichen 51 der ersten Hartstoffpartikel 45 und die Bearbeitungsrate hängt wesentlich von der Größe des Überstandes der ersten Hartstoffpartikel in den vorderseitigen Bereichen 51 ab. Die ersten Hartstoffpartikel 45 weisen im vorderseitigen Bereich 51 einen vorderseitigen Überstand **T_{front}** und im rückseitigen Bereich einen rückseitigen Überstand **T_{back}** auf, die im Ausführungsbeispiel übereinstimmen. Alternativ können die ersten Hartstoffpartikel 45 unterschiedliche vorderseitige Überstände T_{front} und rückseitige Überstände T_{back} aufweisen.

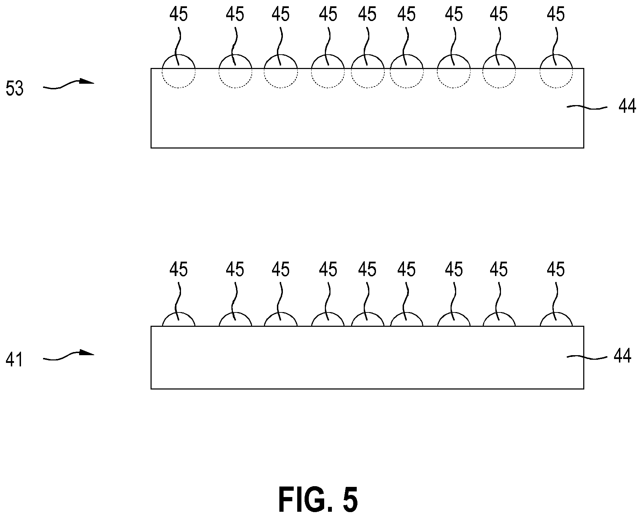

Die Herstellung des Bearbeitungssegmentes 41 erfolgt mithilfe des erfindungsgemäßen Verfahrens in zwei Stufen: In einer ersten Stufe wird ein Grünling **53** hergestellt und in einer zweiten Stufe wird der Grünling 53 zum Bearbeitungssegment 41 weiterverarbeitet. **FIG. 5** zeigt den Grünling 53 und das Bearbeitungssegment 41. Der Grünling 53 wird aus dem ersten Matrixwerkstoff 44 und den ersten Hartstoffpartikeln 45 aufgebaut.

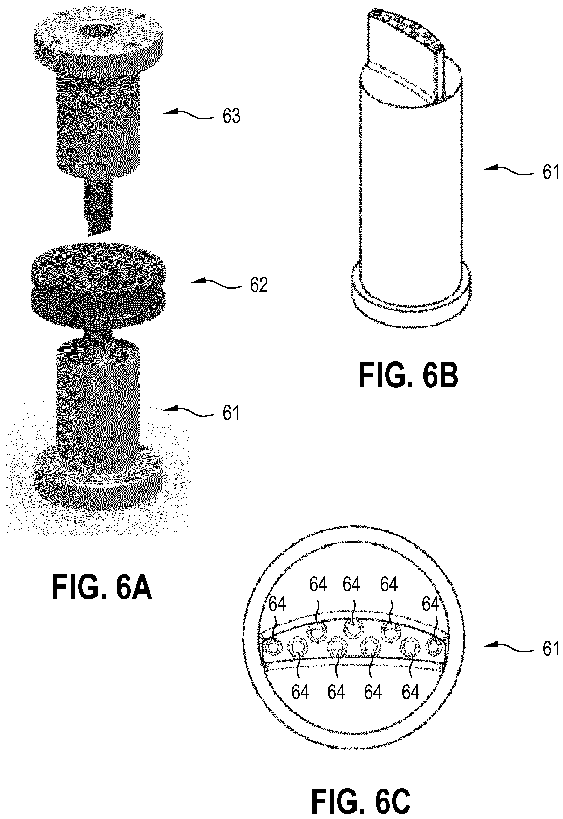

**FIGN. 6A-C** zeigen einige Werkzeugkomponenten, die bei der Herstellung des Bearbeitungssegmentes 41 mithilfe des erfindungsgemäßen Verfahrens eingesetzt werden. Die Werkzeugkomponenten umfassen einen Unterstempel **61**, eine Matrize **62** und einen Oberstempel **63**, wobei der Unterstempel 61 auch als erster Pressstempel und der Oberstempel 63 als zweiter Pressstempel bezeichnet wird. FIGN. 6B und 6C zeigen den Unterstempel 61 im Detail.

Der Aufbau des Grünlings 53 erfolgt in der Matrize 62 mit einer Querschnittsfläche, die der gewünschten Geometrie des Grünlings 53 entspricht. Die Matrize 62 weist an der Unterseite eine erste Öffnung auf, in die der Unterstempel 61 verschiebbar ist, und an der Oberseite eine zweite Öffnung, in die der Oberstempel 63 verschiebbar ist. Der Unterstempel 61 weist in der Pressfläche Vertiefungen **64** auf, deren Anordnung dem definierten Partikelmuster der ersten Hartstoffpartikel 45 entspricht.

Der Grünling 53 wird von oben nach unten aufgebaut. Die ersten Hartstoffpartikel 45, die beim Bearbeitungssegment 41 an der Oberseite 48 überstehen und den Betonwerkstoff bearbeiten, werden in die Vertiefungen 64 des Unterstempels 61 platziert. Auf die platzierten ersten Hartstoffpartikel 45 wird der erste Matrixwerkstoff 44 aufgetragen, wobei der erste Matrixwerkstoff 44 in einer Lage oder in mehreren Lagen aufgetragen werden kann. Der erste Matrixwerkstoff 44 wird mithilfe eines Füllschuhs in die Matrize 62 eingefüllt, bis die gewünschte Füllhöhe erreicht ist. Der fertige Grünling 53 wird unter Druckeinwirkung mithilfe des Unterstempels 61 und des Oberstempels 63 zum Pressling 54 verdichtet.

Mit dem erfindungsgemäßen Verfahren werden Bearbeitungssegmente 41 hergestellt, bei denen bereits die Grünlinge 53 einen Überstand der ersten Hartstoffpartikel 45 gegenüber dem ersten Matrixwerkstoff 44 aufweisen. Das Heißpressen des Grünlings 53 zum Bearbeitungssegment 41 erfolgt mithilfe des speziellen Unterstempels 61, der bereits beim Aufbau des Grünlings 53 eingesetzt wurde. Das Heißpressen des Grünlings 53 erfolgt in einer Pressrichtung senkrecht zur Querschnittsfläche des Grünlings 53. Die Vertiefungen 64 in der Pressfläche des Unterstempels 61 weisen eine Anordnung auf, die dem definierten Partikelmuster der ersten Hartstoffpartikel 45 entspricht. Mithilfe des speziellen Unterstempels 61 können die Bearbeitungssegmente 41 erzeugt werden, die für die Trockenbearbeitung von Betonwerkstoffen geeignet sind.

Bei direktem Kontakt zwischen den ersten Hartstoffpartikeln 45 und den Vertiefungen 64 des Unterstempels 61 kann es zu einem erhöhten Verschleiß des Unterstempels 61 kommen. Um den Verschleiß des Unterstempels 61 zu reduzieren, sollte ein direkter Kontakt der ersten Hartstoffpartikel 45 mit dem Unterstempel 61 vermieden werden. Als Maßnahmen eignen sich das Auftragen einer Schutzschicht in die Vertiefungen 64 vor dem Platzieren der ersten Hartstoffpartikel 45 und/oder die Verwendung von umhüllten ersten Hartstoffpartikeln.

Vor dem Platzieren der ersten Hartstoffpartikel 45 kann eine Schutzschicht des ersten Matrixwerkstoffes 44 in die Vertiefungen des Unterstempels 61 aufgetragen werden. Alternativ kann eine Schutzschicht eines zweiten Matrixwerkstoffes in die Vertiefungen 64 des Unterstempels 61 aufgetragen werden, wobei der zweite Matrixwerkstoff vom ersten Matrixwerkstoff 44 verschieden ist. Bei Verwendung eines zweiten Matrixwerkstoffes, der vom ersten Matrixwerkstoff 44 verschieden ist, können Matrixwerkstoffe mit unterschiedlichen Verschleißeigenschaften eingesetzt werden. Der zweite Matrixwerkstoff dient zum Schutz des Unterstempels 61 beim Heißpressen des Grünlings 53 und sollte beim fertigen Bearbeitungssegment möglichst schnell entfernt werden können, um die ersten Hartstoffpartikel 45, die den Untergrund bearbeiten, freizustellen. Ein zweiter Matrixwerkstoff mit einer höheren Verschleißrate als der erste Matrixwerkstoff 44 lässt sich schnell entfernen.

Die Verwendung von umhüllten ersten Hartstoffpartikeln hat den Vorteil, dass die ersten Hartstoffpartikel 45 nicht in direktem Kontakt mit dem Unterstempel 61 kommen und der Verschleiß des Unterstempels 61 reduziert werden kann. Als Hüllwerkstoff für die ersten Hartstoffpartikel 45 kann der erste Matrixwerkstoff 44 verwendet werden. Alternativ kann ein zweiter Matrixwerkstoff als Hüllwerkstoff für die ersten Hartstoffpartikel 45 verwendet werden, wobei der zweite Matrixwerkstoff vom ersten Matrixwerkstoff 44 verschieden ist. Bei Verwendung eines Hüllwerkstoffs, der vom ersten Matrixwerkstoff 44 verschieden ist, können Matrixwerkstoffe mit unterschiedlichen Verschleißeigenschaften eingesetzt werden. Der Hüllwerkstoff dient zum Schutz des Unterstempels 61 beim Heißpressen und sollte beim fertigen Bearbeitungssegment möglichst schnell entfernt werden können, um die ersten Hartstoffpartikel 45, die den Betonwerkstoff bearbeiten, freizustellen.

Abhängig von den Verschleißeigenschaften des ersten Matrixwerkstoffes 44 kann es während der Bearbeitung eines Untergrundes mit dem Bearbeitungssegment 41 durch Reibung mit dem Untergrund zu einem verstärkten Verschleiß des ersten Matrixwerkstoffes 44 an den Seitenflächen des Bearbeitungssegmentes kommen. Dieser Verschleiß kann durch zweite Hartstoffpartikel reduziert werden. Die zweiten Hartstoffpartikel können als statistisch verteilte Partikel dem ersten Matrixwerkstoff 44 beigemischt werden oder die zweiten Hartstoffpartikel werden gemäß einem definierten zweiten Partikelmuster im ersten Matrixwerkstoff 44 platziert. Die zweiten Hartstoffpartikel werden insbesondere im Bereich der Seitenflächen des Bearbeitungssegmentes 41 platziert.

## Patentansprüche

1. Verfahren zur Herstellung eines Bearbeitungssegmentes (11A, 11B; 21A, 21B; 31; 41), mit den Schritten:
▪ ein Grünling (53) wird aus einem ersten Matrixwerkstoff (44) und ersten Hartstoffpartikeln (45) aufgebaut,
▪ der Grünling (53) wird durch Heißpressen unter Temperatur- und Druckeinwirkung zum Bearbeitungssegment (41) weiterverarbeitet,
**dadurch gekennzeichnet, dass** beim Herstellen des Grünlings (53) die ersten Hartstoffpartikel (45) in Vertiefungen (64) eines Pressstempels (61) platziert werden und der erste Matrixwerkstoff (44) auf die ersten Hartstoffpartikel (45) aufgetragen wird.

2. Verfahren nach Anspruch 1, **dadurch gekennzeichnet, dass** der Pressstempel (61) mit den Vertiefungen (64) beim Heißpressen des Grünlings (53) verwendet wird.

3. Verfahren nach einem der Ansprüche 1 bis 2, **dadurch gekennzeichnet, dass** vor dem Platzieren der ersten Hartstoffpartikel (45) eine Schutzschicht des ersten Matrixwerkstoffes (44) in die Vertiefungen (64) des Pressstempels (61) aufgetragen wird.

4. Verfahren nach einem der Ansprüche 1 bis 2, **dadurch gekennzeichnet, dass** vor dem Platzieren der ersten Hartstoffpartikel (45) eine Schutzschicht eines zweiten Matrixwerkstoffes in die Vertiefungen (64) des Pressstempels (61) aufgetragen wird, wobei der zweite Matrixwerkstoff vom ersten Matrixwerkstoff (44) verschieden ist.

5. Verfahren nach einem der Ansprüche 1 bis 4, **dadurch gekennzeichnet, dass** erste Hartstoffpartikel (45) verwendet werden, die von einem Hüllwerkstoff umhüllt sind, wobei der Hüllwerkstoff dem ersten Matrixwerkstoff (44) entspricht.

6. Verfahren nach einem der Ansprüche 1 bis 4, **dadurch gekennzeichnet, dass** erste Hartstoffpartikel (45) verwendet werden, die von einem Hüllwerkstoff umhüllt sind, wobei der Hüllwerkstoff vom ersten Matrixwerkstoff (44) verschieden ist.

7. Verfahren nach einem der Ansprüche 1 bis 6, **dadurch gekennzeichnet, dass** dem ersten Matrixwerkstoff (44) zweite Hartstoffpartikel beigemischt werden, wobei ein mittlerer Partikeldurchmesser der zweiten Hartstoffpartikel kleiner als ein mittlerer Partikeldurchmesser der ersten Hartstoffpartikel (45) ist.
